# EUROPÄISCHE PATENTSCHRIFT

(11) **EP 3 291 909 B1**
(45) Veröffentlichungstag und Bekanntmachung des Hinweises auf die Patenterteilung: **02.12.2020**
(21) Anmeldenummer: 16716605.7
(22) Anmeldetag: 15.04.2016
(51) Int. Cl.: B01D 46/00, B01D 46/10, B01D 46/52

(54) **VERFAHREN ZUM HERSTELLEN VON FILTERBÄLGEN**
METHOD FOR PRODUCING FILTER BELLOWS
PROCÉDÉ DE FABRICATION DE SOUFFLETS DE FILTRATION

(30) Priorität: 04.05.2015 DE 102015005565
(43) Veröffentlichungstag der Anmeldung: 14.03.2018
(73) Patentinhaber: MANN+HUMMEL GmbH, 71636 Ludwigsburg (DE)
(72) Erfinder: DIRNBERGER, Timo, 71672 Marbach (DE); RÖHRIG, Markus, 84036 Landshut (DE); SCHMID, Daniel, 74343 Sachsenheim (DE); EPLI, Sven, 74078 Heilbronn (DE); SCHMIDL, Markus, 94431 Pilsting (DE)
(74) Vertreter: Seyboth, Matthias
(86) Internationale Anmeldenummer: PCT/EP2016/058438
(87) Internationale Veröffentlichungsnummer: WO 2016/177553

(56) Entgegenhaltungen:
- EP-A1- 2 857 573
- WO-A1-2014/009357
- WO-A1-2015/075104
- DE-A1-102010 053 200
- US-A1- 2008 107 765

## Beschreibung

### Technisches Gebiet

Die Erfindung betrifft ein Verfahren zum Herstellen von Filterbälgen aus einem zickzackförmig gefalteten Filtermedium, insbesondere zur Verwendung als Flachluftfilter einer Brennkraftmaschine, insbesondere eines Kraftfahrzeugs.

### Stand der Technik

Stirnfalten sind die beiden äußeren Falten an gegenüberliegenden Stirnseiten des Filterbalgs eines Filterelements. Stirnränder sind die beiden freien Ränder des Filtermediums, aus dem der Filterbalg gebildet wird, welche entlang der Stirnfalten verlaufen und diese an den Stirnseiten des Filterbalgs begrenzen. Stirnkanten des Filterbalgs sind die beiden anderen freien Ränder des Filterbalgs, die sich zwischen den Stirnrändern erstrecken und entsprechend der Faltung des Filterbalgs verlaufen. Die Faltkanten sind die Kanten, entlang denen das Filtermedium gefaltet ist. Bei einem vom Markt her bekannten zickzackförmig gefalteten, etwa quaderförmigen Filterbalg sind die Stirnränder und die Faltkanten in der Regel gerade und verlaufen parallel zueinander. Die Stirnkanten verlaufen von der Seite auf den Filterbalg betrachtet zickzackförmig und senkrecht zu den Stirnrändern und den Faltkanten. Vor dem Falten des Filtermediums verlaufen die Stirnkanten des später eine etwa quaderförmige gedachte Umhüllende aufweisenden Filterbalgs gerade und parallel zueinander. Die gedachte Umhüllende wird durch die Stirnkanten, die auf einer Reinfluidseite des Filterbalgs benachbarten Faltkanten bzw. Stirnränder und die auf einer Rohfluidseite benachbarten Faltkanten bzw. Stirnränder, aufgespannt.

Bei Filterbälgen von Flachfilterelementen sind die Filtermedien nicht geschlossen, d.h., die Stirnfalten sind ebenso wie die Stirnkanten nicht miteinander verbunden. Im Unterschied dazu sind bei Filterbälgen von Rundfilterelementen die Filtermedien geschlossen, d.h., ihre Stirnfalten sind miteinander verbunden. Filterbälge von Flachfilterelementen können dabei eben sein, aber auch Biegungen in unterschiedliche Richtungen aufweisen.

Stand der Technik sind rechteckige oder trapezförmige Filterbälge für Flachfilterelemente oder Filterbälge mit abgeschnittenen Ecken, die aus einem endlos laufenden Band eines Filtermediums gefertigt werden. Durch Laserbeschnitt beispielsweise ist eine Vielzahl an Geometrien vorstellbar, die jedoch zum Teil mit erheblichem Papierverlust und damit Abfall an Filtermedium einhergehen.

In WO 2014/009357 A1 ist ein Verfahren zur Herstellung von gefalteten Filterelementen beschrieben, wobei ein Filtermedium geprägt und anschließend zumindest abschnittsweise getrennt und dann gefaltet wird.

In US 2008/107765 A1 sind verschiedene unregelmäßige Balggeometrien und Verfahren zur Herstellung entsprechender Filterelemente offenbart.

### Offenbarung der Erfindung

Eine Aufgabe der Erfindung ist es, ein kostengünstiges Verfahren zur Herstellung eines Filterbalgs zu schaffen, das es erlaubt, Filterbälge für beengte Bauräume zu fertigen.

Die vorgenannte Aufgabe wird nach einem Aspekt der Erfindung gelöst von einem Verfahren zum Herstellen von wenigstens zwei Filterbälgen aus einem Balg mit einem in einer Laufrichtung laufenden Filtermedium mit Faltkanten, wobei die Filterbälge parallel hergestellt werden, nach Anspruch 1.

Günstige Ausgestaltungen und Vorteile der Erfindung ergeben sich aus den weiteren Ansprüchen, der Beschreibung und der Zeichnung.

Es wird ein Verfahren zum Herstellen von wenigstens zwei Filterbälgen aus einem Balg mit einem in einer Laufrichtung laufenden Filtermedium mit Faltkanten vorgeschlagen. Dabei werden die Filterbälge parallel hergestellt, indem im Balg eine Schnittbahn zwischen Stirnkantenflächen der Filterbälge wenigstens bereichsweise quer zu den Faltkanten so ausgeführt wird, dass die Filterbälge in Laufrichtung nebeneinander liegend und punktsymmetrisch zueinander ausgebildet werden.

Das erfindungsgemäße Verfahren erlaubt es, Filterbälge beispielsweise aus einem endlos laufenden Band eines Balgs mit Filtermedium, welcher zickzackförmig aufgestellte Falten aufweist, so zu fertigen, dass der Verschnitt und damit der Abfall an Filtermedium gegenüber herkömmlichen Herstellungsverfahren reduziert wird. Dies kann nach dem vorgeschlagenen Verfahren dadurch erreicht werden, dass die Filterbälge in Laufrichtung nebeneinander liegend und punktsymmetrisch zueinander ausgebildet werden. Eine Figur wird als punktsymmetrisch bezeichnet, wenn sie durch eine Punktspiegelung an einem Symmetriepunkt auf sich selbst abgebildet wird. Anders ausgedrückt, kann die Figur durch einfache Spiegelung an zwei zueinander senkrecht liegenden Ebenen auf sich selbst abgebildet werden.

Dadurch können über die Breite des Balgs mehrere Filterbälge nebeneinander hergestellt werden. Außerdem ist es durch geeignete Ausbildung der Beschnittkanten des Filterbalgs möglich, die Filterbälge in Laufrichtung des Balgs direkt aufeinanderfolgend aus dem Filtermedium auszuschneiden, ohne dazwischen Verschnitt zu bekommen. Es ist also sinnvoll, einen symmetrischen Beschnitt, beispielsweise mit Hilfe eines Lasers, auszuführen, um so keine Mehrkosten zu einem Standard-Filterelement zu erzeugen, da bei der Fertigung der Filterelemente dann aus einem großen beschnittenen Balg beispielsweise wenigstens zwei Filterbälge für Filterelemente nebeneinander und gegebenenfalls auch hintereinander gefertigt werden können.

Die Falten seitens der Stirnkanten können jeweils mittels zumindest einer Dichtmittelspur seitlich abgedichtet sein. Günstigerweise kann dafür ein Schmelzkleber eingesetzt werden. Alternativ ist auch eine Abdichtung mit einem Seitenband denkbar. Für den Fall, dass ein oder mehrere Seitenbänder zur seitlichen Abdichtung verwendet werden, sind die Seitenbänder vorzugsweise aus einem flexiblen Vliestreifen gebildet, der insbesondere mit der zugeordneten Stirnkante verklebt ist. Der Einsatz des Schmelzklebers stellt jedoch eine bevorzugte kostengünstige Möglichkeit dar, die zudem den Vorteil möglichst hoher Flexibilität und Gestaltungsfreiheit aufweist.

Zwischen einem ersten und einem zweiten Elementabschnitt des Filterbalgs kann ein weiterer Elementabschnitt angeordnet sein, wobei an einer oder beiden einander gegenüberliegenden Stirnkantenflächen des weiteren Elementabschnitts die Richtungsänderung erfolgt. So kann beispielsweise eine Stirnkantenflächen als ebene Fläche weitergeführt sein, während die gegenüberliegende Stirnkantenfläche unter einem Winkel, der auch kleiner als 180° sein kann, weitergeführt wird, bis die Stirnkantenfläche dann auf eine Stirnkantenfläche des zweiten Elementabschnitts trifft.

Die Richtungsänderung an einer Grenzfläche kann dabei zwischen dem ersten Elementabschnitt und dem zweiten Elementabschnitt erfolgen. Auf diese Weise können die Faltenkanten beispielsweise parallel weitergeführt sein, während die Stirnkantenflächen unter einem Winkel abknicken und ebenso im Wesentlichen parallel zueinander weiterlaufen. In einer anderen Ausführungsform können die beiden Stirnkantenflächen jedoch auch nicht parallel weitergeführt sein. Dadurch können Richtungsänderungen von Stirnkantenflächen sehr flexibel und modular gestaltet werden.

Weiter ausgeführt kann bei mehreren Elementabschnitten des Filterelements die Richtungsänderung an einer Grenzfläche zwischen dem ersten Elementabschnitt und dem weiteren Elementabschnitt und/oder an einer Grenzfläche zwischen dem weiteren Elementabschnitt und dem zweiten Elementabschnitt erfolgen. Dadurch ist es möglich, dass beispielsweise der erste und der zweite Elementabschnitt jeweils rechteckförmig, aber mit unterschiedlichen Längen der Falten ausgeführt sind, während der dazwischen angeordnete Elementabschnitt den Übergang der Stirnkantenflächen von dem ersten Elementabschnitt zu dem zweiten Elementabschnitt ausführt und die Richtungsänderung jeweils genau zwischen den Elementabschnitten ausgeführt wird.

Die Richtungsänderung wenigstens einer Stirnkantenfläche kann einen Winkel kleiner als 180° aufweisen, gemessen zwischen den Stirnkantenflächen außerhalb des Filterbalgs. Auf diese Weise ist es möglich, beispielsweise von einem schmaleren Elementabschnitt auf einen breiteren Elementabschnitt überzugehen, oder auch einfach einen Elementabschnitt mit im Wesentlichen parallelen Stirnkantenflächen als Elementabschnitt mit ebenfalls im Wesentlichen parallelen, aber schräg weitergeführten Stirnkantenflächen fortzusetzen. So lassen sich auch nahezu rechteckförmige Elementabschnitte mit unterschiedlichen Tiefen aneinandersetzen oder weiterführen.

Alternativ dazu kann die Richtungsänderung auch an wenigstens einer Stirnkantenfläche einen konkav gekrümmten Abschnitt aufweisen, gesehen von außerhalb des Filterbalgs. Damit lassen sich auch Elementabschnitte mit gekrümmten Stirnkantenflächen darstellen, die sich sehr flexibel an komplexere Bauraumvorgaben anpassen können. Beispielsweise können so günstig halbkreisförmige Grundrisse oder Aussparungen eines Filterelements umgesetzt werden. Auf diese Weise ist möglich, mit dem Filterelement ein Filtergehäuse, das aufgrund von Bauraumvorgaben mit komplexeren Aussparungen ausgestaltet ist, auch möglichst effektiv auszufüllen.

Weiter kann die Richtungsänderung an wenigstens einer Stirnkantenfläche einen konvex gekrümmten Abschnitt aufweisen, gesehen von außerhalb des Filterbalgs. Damit lassen sich, ebenso wie mit konkav gekrümmten Abschnitten, auch Elementabschnitte mit gekrümmten Stirnkantenflächen darstellen, die nach außen von einer ebenen Stirnkantenfläche abweichen und sich nach außen wölben. Dadurch können sie sehr flexibel an komplexere Bauraumvorgaben angepasst werden.

Auch kann die Richtungsänderung an wenigstens einer Stirnkantenfläche aufeinanderfolgend gegenläufig gekrümmte Abschnitte aufweisen, also einen konvex gekrümmten Abschnitt, gefolgt von einem konkav gekrümmten Abschnitt, gesehen von außerhalb des Filterbalgs. Auf diese Weise ist es möglich, einen kontinuierlich gekrümmten Verlauf in einer Stirnkantenfläche eines Filterelements darzustellen und so an konstruktiv günstig gestaltete Filtergehäusedimensionen anzupassen.

So kann ein kontinuierlicher Übergang einer Stirnkantenfläche eines Elementabschnitts über eine Stirnkantenfläche eines anschließenden Elementabschnitts zu einer Stirnkantenfläche eines anschließenden Elementabschnitts ausgebildet sein. So können Filterelemente hergestellt werden, die keine Ecken oder Kanten im Verlauf der Stirnkantenflächen aufweisen.

Ein Versteifungssteg kann quer zu den Falten so angeordnet sein, dass die Faltkanten durch den Versteifungssteg fixiert sind. Dadurch erfahren die Falten des Filtermediums eine zu einer Stirnkantenabdichtung beispielsweise durch ein Band oder eine Verklebung zusätzliche Abstützung, welche den Filterbalg insgesamt mechanisch stabilisiert und so auch gegen einen Strömungsdruck des zu filternden Fluids abstützt. So kann die Lebensdauer des Filterelements günstig erhöht werden.

Weiter können die Falten eine voneinander verschiedene Faltenhöhe aufweisen, insbesondere eine von einer Seitenkante zu einer anderen Seitenkante des Filterbalgs sich kontinuierlich verändernde Faltenhöhe aufweisen. Im Speziellen kann die Faltenhöhe von einem Ende des Filterbalgs zu einem anderen Ende des Filterbalgs zunehmen oder abnehmen, so dass eine keilartige Form der Höhe des Filterbalgs darstellbar ist, was sich für bestimmte Einbauanforderungen in Kraftfahrzeugen als günstig erweisen kann.

Beim erfindungsgemäßen Verfahren zur Herstellung von Filterbälgen kann die Schnittbahn entlang der Laufrichtung eine Richtungsänderung erfahren. So können auch nichtgeradlinig verlaufende Seitenflächen eines Filterbalgs dargestellt werden, die dann entsprechend punktsymmetrisch in einem benachbarten Filterbalg aus dem Balg des Filtermediums geschnitten werden können.

In einer vorteilhaften Ausgestaltung des Verfahrens können so wenigstens vier Filterbälge parallel hergestellt werden, indem wenigstens eine Schnittbahn quer und wenigstens eine Schnittbahn entlang der Laufrichtung ausgeführt wird. Dies ist realisierbar, wenn die Stirnkantenflächen und die Stirnränder entsprechend symmetrisch oder punktsymmetrisch ausgebildet sind.

Günstigerweise kann so die Schnittbahn quer zur Laufrichtung eine Richtungsänderung erfahren. Damit können an zwei gegenüber liegenden Stirnseiten symmetrisch verlaufende Stirnränder dargestellt werden, die, wenn die Filterbälge aufeinander in dem fortlaufenden Filtermedium herausgeschnitten werden, direkt aneinander liegen.

Erfindungsgemäß erfährt die Schnittbahn längs der Laufrichtung eine Richtungsänderung. Damit können an zwei gegenüber liegenden Seiten des Filterbalgs symmetrisch verlaufende Seitenflächen dargestellt werden, die, wenn die Filterbälge nebeneinander in dem fortlaufenden Filtermedium herausgeschnitten werden, direkt aneinander liegen.

In einer vorteilhaften Ausgestaltung des Verfahrens können ein vorderer Stirnrand und ein hinterer Stirnrand eines Filterbalgs durch eine Punktsymmetrie komplementär zueinander ausgebildet sein. Damit können an zwei gegenüber liegenden Stirnseiten komplementär verlaufende Stirnränder dargestellt werden, die, wenn die Filterbälge aufeinander in dem fortlaufenden Filtermedium herausgeschnitten werden, direkt aneinander liegen.

Erfindungsgemäß wird die Richtungsänderung mit einem oder mehreren Winkeln von weniger als 45° ausgeführt. Eine solche Gestaltung der Schnittbahn ist vorteilhaft, wenn andere Werkzeuge als Laser als Schneidwerkzeuge eingesetzt werden sollen, bei denen die räumliche Beweglichkeit des Schneidkopfes gegenüber einem Laser eingeschränkt ist.

Weiterhin wird die Richtungsänderung mit einem oder mehreren Radien ausgeführt. Damit ist es möglich, sehr flexibel unterschiedlichste Geometrien von Filterbälgen umzusetzen, die für beengte Einbauräume von Filterelementen von Vorteil sein können.

Vorteilhaft kann als Filtermedium Cellulose eingesetzt werden. Als Filtermedien werden günstigerweise Vliese eingesetzt. Cellulose ist dafür sehr flexibel einsetzbar und auch aus Umweltgesichtspunkten durch die leichte Abbaubarkeit von großem Vorteil.

Nach einem weiteren Aspekt betrifft die Erfindung ein Filterelement zum Filtern eines Fluids, mit einem Filterbalg, der entlang von Faltkanten zickzackförmig zu Falten gefaltet ist, die sich jeweils zwischen gegenüberliegenden Stirnkanten des Filterbalgs erstrecken. Dabei sind die Falten seitens der Stirnkanten jeweils, insbesondere mittels zumindest einer Dichtmittelspur oder einem Seitenband, seitlich abgedichtet, wobei wenigstens eine der Stirnkantenflächen und gegebenenfalls eine der Seitenflächen eine Richtungsänderung erfährt. Durch die vorstehend beschriebene symmetrische oder punktsymmetrische Ausgestaltung von Stirnkantenflächen und gegebenenfalls Stirnrändern können die Filterbälge direkt aneinander liegend und gegebenenfalls aufeinander folgend aus dem Balg des Filtermediums ausgeschnitten werden und der Verschnitt und damit Abfall des Filtermediums reduziert werden.

Vorteile der erfindungsgemäßen Lösung eines Filterelements mit einem zickzackförmig gefalteten Filtermedium zum Filtern eines Fluids, insbesondere einer Brennkraftmaschine, insbesondere eines Kraftfahrzeugs, ergeben sich durch eine bessere Bauraumausnutzung des Filterelements. Aufgrund von Bauraumanforderungen in Kraftfahrzeugen ergeben sich diverse Außengeometrien eines Filterelements wie dreieck-, trapez-, doppeltrapezförmige Gestalt, die für einen Einsatz im Motor- oder Innenraum eines Kraftfahrzeugs günstig sind. Der Vorteil der erfindungsgemäßen Lösung ist, dass dabei nicht ein im Wesentlichen rechteckförmiger Filterbalg durch einen Beschnitt in die gewünschte Form gebracht wird, oder dass ein Filterelement aus mehreren Teilelementen zusammengesetzt werden muss. Auch zeichnen sich bisher bekannte Beschnittgeometrien dadurch aus, dass diese entlang der Stirnkante verlaufen und einen Schnittwinkel größer gleich 180° aufweisen. Das erfindungsgemäße Filterelement erlaubt wesentlich größere Gestaltfreiheiten und Flexibilitäten im Einbau in komplexe Bauräume. Das Filterelement kann so verschiedene Elementabschnitte umfassen, die gegeneinander unabhängige Richtungsänderungen der Stirnkantenflächen erlauben. Auch lassen sich dadurch Hinterschnitte im Filterbalg darstellen. Diese Richtungsänderungen müssen auch nicht unbedingt nur ebene Stirnkantenflächen umfassen, sondern sind erfindungsgemäß auch auf gekrümmte Stirnkantenflächen ausgedehnt. Dies ist besonders von Vorteil, da so neben der flexiblen Bauraumgestaltung eine einteilige Herstellung des Filterelements ermöglicht wird und außerdem die Gehäusestabilität durch eine geschwungene Form erhöht werden kann.

Vorteilhaft kann am Umfang des Filterbalgs eine umlaufende Dichtung vorgesehen sein. Dadurch ist eine effektive Abdichtung des Filterelements beim Einbau in ein Filtergehäuse und somit die Trennung zwischen einer Rohfluidseite und einer Reinfluidseite möglich. Die Effektivität eines Filtersystems hängt im Wesentlichen von einer zuverlässigen Trennung von Rohfluidseite von der Reinfluidseite ab. Vor allem muss die Abdichtung unter den unterschiedlichsten Umweltbedingungen beim Einsatz in einem Kraftfahrzeug funktionieren, was große Temperaturunterschiede, Feuchtigkeit, Vibrationen und dergleichen umfasst. Leckagen des Filtersystems zwischen der Rohfluidseite und der Reinfluidseite lassen sich so mit ziemlicher Sicherheit vermeiden.

Ganz besonders vorteilhaft kann deshalb als umlaufende Dichtung eine an den Filterbalg deckungsgleich angeschäumte Dichtung, beispielsweise aus PUR-Schaum, vorgesehen sein. Damit ist es möglich, eine möglichst feste Verbindung zwischen dem Filterbalg und der Dichtung darzustellen, die auch im Wesentlichen dauerhaft dicht ist und so die Effektivität des Filtersystems zumindest über die Standzeit des Filterelements gewährleistet. Als Werkstoff für die angeschäumte Dichtung kommen beispielsweise Polyurethanschäume in Betracht, die eine sehr flexible Formgestaltung und andererseits eine feste und dauerhafte Verbindung erlauben. Auch sind die Verarbeitungsprozesse so gestaltbar, dass herkömmliche Filtermedien damit verträglich umschäumt werden können und nicht an den Schnittstellen zwischen Kunststoff und Filtermedium Degradationen auftreten können. Auf diese Weise können auch große Gestaltungsmöglichkeiten der Form des Filterelements erreicht werden.

Gemäß einer vorteilhaften Ausgestaltung kann die umlaufende Dichtung an Stirnkanten und Seitenkanten angeordnet sein. Auf diese Weise ist es möglich, das Filterelement in das Gehäuseunterteil eines Filtergehäuses einzusetzen, so dass die Rohfluidseite des Filterelements mit einer Gehäusekante abschließt und das Gehäuseoberteil darauf aufgesetzt werden kann. So kann die Rohfluidseite des Filterelements günstig von der Reinfluidseite des Filterelements abgedichtet werden. Auch bei einem Wechsel des Filterelements ist so eine Verschmutzung der Reinfluidseite des Filtersystems vermeidbar.

In einer vorteilhaften Ausgestaltung kann am Umfang des Filterbalgs eine umlaufende Dichtung vorgesehen sein, deren mittlere Breite im Bereich der konvex und/oder konkav gekrümmten Abschnitte der Stirnkantenflächen breiter ist als außerhalb der Abschnitte. Dadurch lassen sich Werkzeuge zum Herstellen der umlaufenden Dichtung durch Anspritzen an den Filterbalg günstig gestalten und können so kostengünstig gefertigt werden. Damit lassen sich die gesamten Herstellkosten eines Filterelements reduzieren.

Nach einem weiteren Aspekt betrifft die Erfindung ein Filtersystem mit einem Filterelement, wobei das Filterelement austauschbar in einem Filtergehäuse angeordnet ist, das wenigstens ein Gehäuseunterteil und ein Gehäuseoberteil umfasst, welche lösbar fluiddicht verbunden sind, und wobei das Filterelement eine Rohfluidseite von einer Reinfluidseite des Filtersystems fluiddicht trennt. Auf diese Weise ist es möglich, das Filterelement in das Gehäuseunterteil des Filtergehäuses einzusetzen, so dass die Rohfluidseite des Filterelements mit einer Gehäusekante abschließt und das Gehäuseoberteil darauf aufgesetzt werden kann. So kann die Rohfluidseite des Filterelements günstig von der Reinfluidseite des Filterelements abgedichtet werden. Das Filterelement ist so bei Beladung mit Schmutz leicht austauschbar. Auch ist bei einem Wechsel des Filterelements mit einer solchen Anordnung eine Verschmutzung der Reinfluidseite des Filtersystems vermeidbar.

Das Filtersystem mit dem erfindungsgemäßen Filterelement erlaubt eine günstige Ausnutzung des verfügbaren Bauraums beim Verbau des Filtersystems, der gerade im Kraftfahrzeugbereich knapp bemessen ist. Bei gleich komplexem Einbauraum gelingt hierdurch eine Steigerung der Kapazität des Filterelements. In Verbindung mit dem Einspannen des Filterelementes in einen Rahmen kann das Filterelement in nahezu jegliche erdenkliche 3D-Geometrie gebracht werden.

Nach einem weiteren Aspekt betrifft die Erfindung die Verwendung des Filtersystems als Flachluftfilter, insbesondere als Flachluftfilter einer Brennkraftmaschine. Denkbar ist auch die Verwendung für andere strömende Medien, wie etwa Öl, Kraftstoff, Harnstoff und dergleichen.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Es zeigen beispielhaft:
- Fig. 1: eine Draufsicht auf einen Balg aus Filtermedium, aus dem nach einem Ausführungsbeispiel der Erfindung zwei aneinander angrenzende Filterbälge ausgeschnitten werden;
- Fig. 2: eine isometrische Darstellung der beiden aneinander grenzenden Filterbälge aus Fig. 1;
- Fig. 3: eine isometrische Darstellung eines Filterbalgs aus Fig. 1;
- Fig. 4: eine isometrische Darstellung eines Filterelements nach einem Ausführungsbeispiel der Erfindung mit dem Filterbalg aus Fig. 3 und angeschäumter Dichtung;
- Fig. 5: eine Draufsicht auf einen Balg aus Filtermedium, aus dem in einem nicht erfindungsgemäßen Verfahren vier aneinander angrenzende Filterbälge ausgeschnitten werden;
- Fig. 6: eine Draufsicht auf einen Balg aus Filtermedium, aus dem nach einem weiteren Ausführungsbeispiel der Erfindung vier aneinander angrenzende Filterbälge ausgeschnitten werden;
- Fig. 7: eine isometrische Darstellung der vier aneinander grenzenden Filterbälge aus Fig. 6;
- Fig. 8: eine isometrische Darstellung eines Filterbalgs aus Fig. 7;
- Fig. 9: eine isometrische Darstellung eines Filterelements nach einem Ausführungsbeispiel der Erfindung mit dem Filterbalg aus Fig. 8 und angeschäumter Dichtung.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

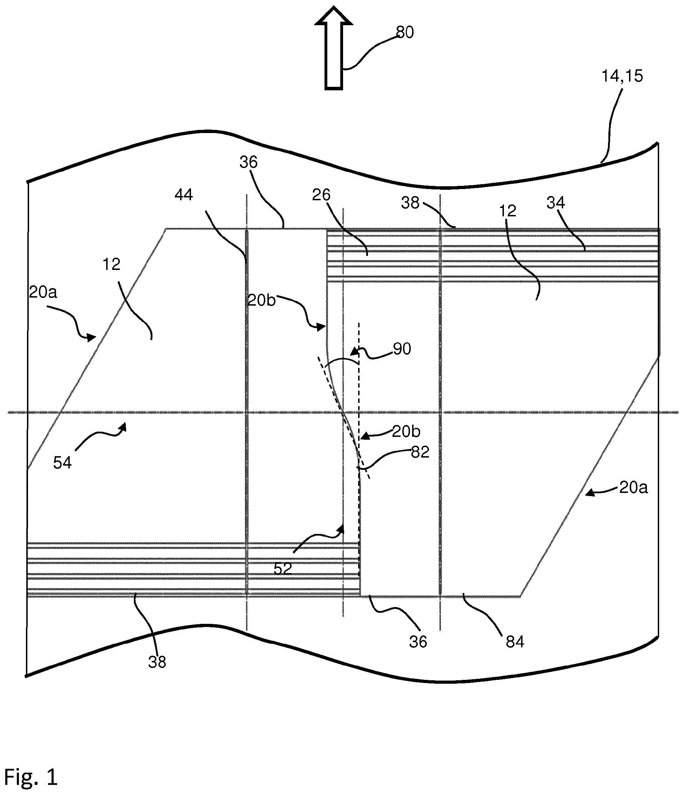

Figur 1 zeigt in Draufsicht einen Balg 15 aus Filtermedium 14, aus dem nach einem Ausführungsbeispiel der Erfindung zwei aneinander angrenzende Filterbälge 12 ausgeschnitten werden. Nach dem erfindungsgemäßen Verfahren werden wenigstens zwei Filterbälge 12 aus dem Balg 15 mit dem in der Laufrichtung 80 laufenden Filtermedium 14 mit Faltkanten 26 parallel hergestellt, indem im Balg 15 eine Schnittbahn 82, 84 zwischen Stirnkantenflächen 20a, 20b und/oder Stirnrändern 36, 38 der Filterbälge 12 wenigstens bereichsweise quer zu den Faltkanten 26 so ausgeführt wird, dass die Filterbälge 12 in Laufrichtung 80 und/oder quer zur Laufrichtung 80 nebeneinander liegend und symmetrisch oder punktsymmetrisch zueinander ausgebildet werden. Die Filterbälge 12 sind dabei punktsymmetrisch ausgebildet, wenn sie durch aufeinander folgende Spiegelungen an den in der Bildebene von Figur 1 senkrecht stehenden Ebenen 52 und 54 gespiegelt in sich selbst übergeführt werden können, was bei den beiden in Figur 1 dargestellten Filterbälgen 12 der Fall ist.

Die Schnittbahn 82 erfährt entlang der Laufrichtung 80 zwei Richtungsänderungen quer zur Laufrichtung 80. Die Richtungsänderung wird jeweils mit einem Winkel 90 von weniger als 45° mit einem Radius ausgeführt, so dass eine kontinuierlich verlaufende Schnittkante erreicht wird. Die Größe des Winkels 90 hängt dabei zweckmäßigerweise auch mit dem verwendeten Schnittwerkzeug und der Geschwindigkeit des laufenden Filtermediums zusammen, so dass diese Parameter je nach Ausgestaltung der Konturen des Filterbalgs anzupassen sind.

Ein Versteifungssteg 44 ist quer zu den Falten 34 so angeordnet, dass die Faltkanten 26 durch den Versteifungssteg 44 fixiert sind.

Vorteilhaft kann als Filtermedium 14 Cellulose eingesetzt werden. Als Filtermedien 14 werden günstigerweise Vliese eingesetzt. Cellulose ist dafür sehr flexibel einsetzbar und auch aus Umweltgesichtspunkten durch die leichte Abbaubarkeit von großem Vorteil.

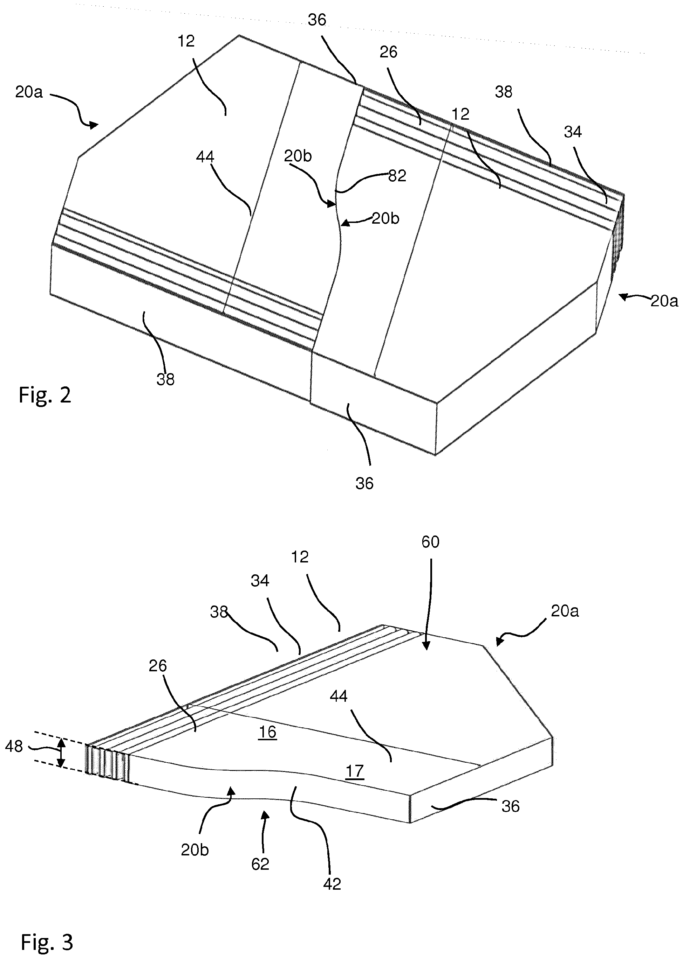

In Figur 2 sind die beiden aneinander grenzenden Filterbälge 12 aus Figur 1 isometrisch dargestellt. Die beiden Filterbälge 12 liegen aufgrund der punktsymmetrisch verlaufenden Stirnkantenfläche 20b direkt aneinander an, so dass sie mit einer geeignet geführten Schnittbahn 82 ohne jeglichen Verschnitt an der Stirnkantenfläche 20b aus dem Balg 15 des Filtermediums 14, wie in Figur 1 dargestellt, ausgeschnitten werden können. Die aufgestellten Falten 34 sind lediglich in einem Teil der Filterbälge 12 ausgeführt. Für den Rest des Filterbalgs sind lediglich die äußeren Konturen dargestellt.

Figur 3 zeigt eine isometrische Darstellung eines einzelnen Filterbalgs 12 aus Figur 1 oder 2. Der Filterbalg 12 ist mit zwei Elementabschnitten 16, 17 ausgebildet. Im linken Teil des Elementabschnitts 16 sind die aufgestellten Falten 34 des Filtermediums 14 zu sehen, im übrigen Bereich sind lediglich die Faltkanten 26 rein schematisch dargestellt. Der Filterbalg 12 ist ebenfalls rein schematisch dargestellt. In der Darstellung ist beispielsweise die Rohfluidseite 60 von oben auf den Filterbalg 12 zu sehen, während die Reinfluidseite 62 unterhalb des Filterbalgs 12 angeordnet ist. Die Falten 34 schließen an beiden Enden des Filterbalgs 12 mit den Stirnrändern 36 und 38 ab. Die Falten 34 weisen eine gleiche Faltenhöhe 48 auf. Eine Dichtmittelspur 42 zum Verkleben und Abdichten der Stirnkanten 22a, 22b ist unmittelbar benachbart an den Stirnkanten 22a, 22b aufgetragen.

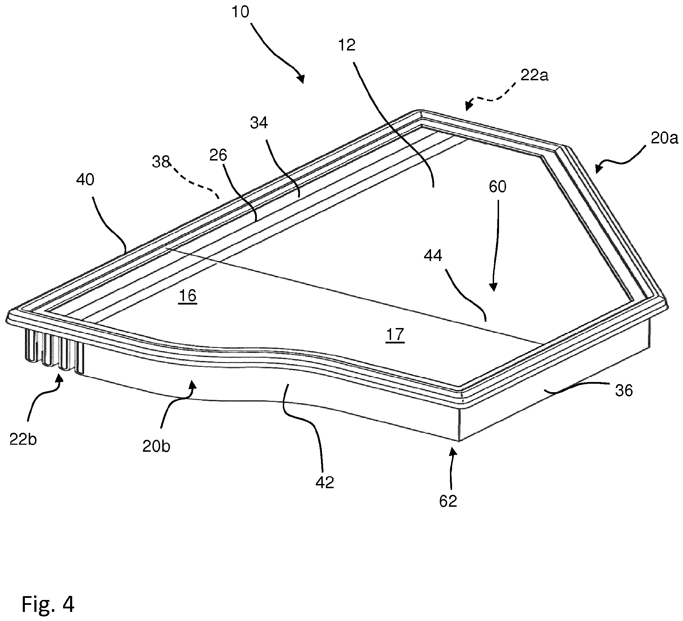

In Figur 4 ist ein Filterelement 10 nach einem Ausführungsbeispiel der Erfindung mit dem Filterbalg 12 aus Figur 3 und angeschäumter Dichtung 40 isometrisch dargestellt. Die Dichtung 40 ist in dem gezeigten Ausführungsbeispiel auf der der Rohfluidseite 60 des Filterbalgs 12 zugewandten Kante angeordnet, so dass der mögliche Eintrag von Staubpartikeln beim Wechsel eines Filterelements 10 in einem Filtergehäuse minimiert wird. Günstigerweise kann dafür eine an den Filterbalg 12 deckungsgleich angeschäumte Dichtung, beispielsweise aus Polyurethanschaum, eingesetzt werden. Der Filterbalg 12 kann jedoch an Stirnkanten 22a, 22b, Stirnkantenflächen 20a, 20b und Stirnrändern 36, 38 einer Rohfluidseite 60 und/oder einer Reinfluidseite 62 eine umlaufende Dichtung 40 aufweisen.

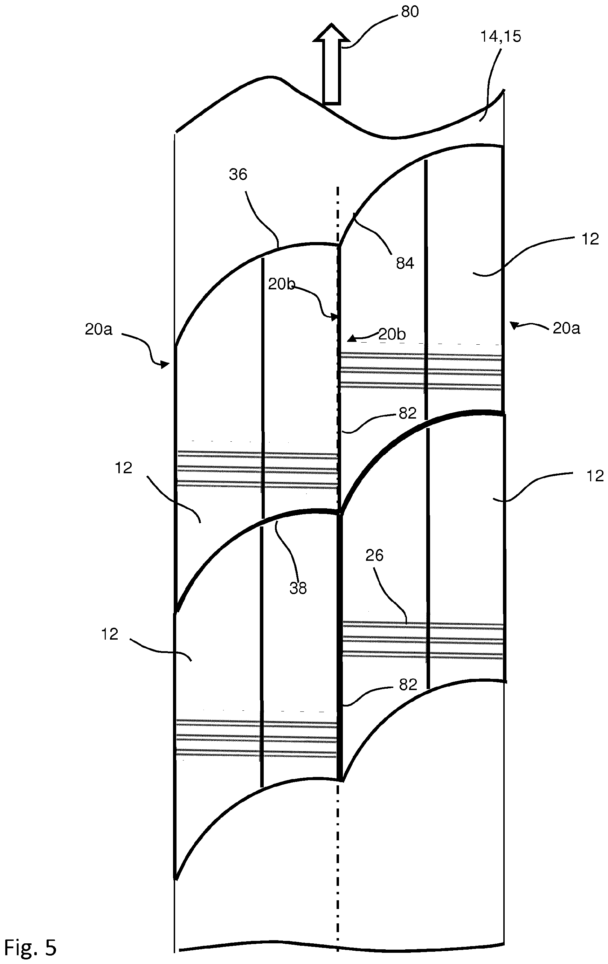

Figur 5 zeigt eine Draufsicht auf einen Balg 15 aus Filtermedium 14 in einer nicht erfindungsgemäßen Ausführungsform, aus dem vier aneinander angrenzende Filterbälge 12 ausgeschnitten werden. Die wenigstens vier Filterbälge 12 können parallel hergestellt werden, indem wenigstens eine Schnittbahn 84 quer und wenigstens eine Schnittbahn 82 entlang der Laufrichtung 80 ausgeführt wird. Die Schnittbahn 84 erfährt dabei eine Richtungsänderung, während die Schnittbahn 82 längs der Laufrichtung 80 verläuft und keine Richtungsänderung erfährt. Ein vorderer Stirnrand 36 und ein hinterer Stirnrand 38 eines Filterbalgs 12 sind derart gekrümmt ausgebildet, dass die beiden Stirnränder 36, 38 von zwei in Laufrichtung 80 des Balgs 15 des Filtermediums 14 aufeinander folgenden Filterbälgen 12 unmittelbar aneinander passen. Die vier Filterbälge 12 können aus dem Balg 15 des Filtermediums 14 ohne Verschnitt und Abfall zwischen den Bälgen 15 ausgeschnitten werden.

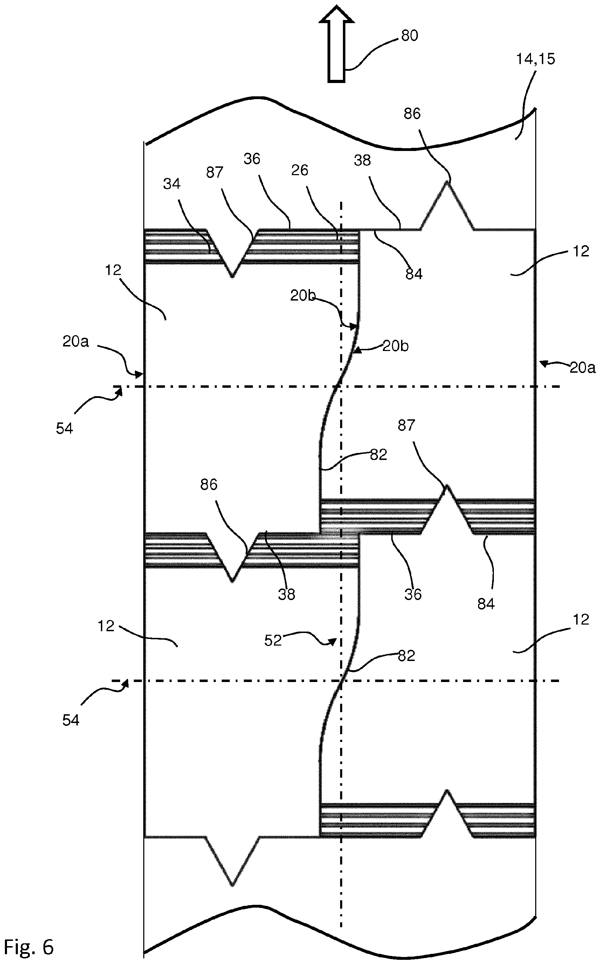

Figur 6 zeigt eine Draufsicht auf einen Balg 15 aus Filtermedium 14, aus dem nach einem weiteren Ausführungsbeispiel der Erfindung vier aneinander angrenzende Filterbälge 12 ausgeschnitten werden. Bezugszeichen sind aus Übersichtlichkeitsgründen nur an zwei Filterbälgen dargestellt, da die Darstellung der übrigen zwei Filterbälge 12 gedoppelt ist. Die wenigstens vier Filterbälge 12 können parallel hergestellt werden, indem wenigstens eine Schnittbahn 84 quer und wenigstens eine Schnittbahn 82 entlang der Laufrichtung 80 ausgeführt wird. Die Schnittbahn 82 erfährt dabei quer zur Laufrichtung 80 eine Richtungsänderung, während die Schnittbahn 84 längs der Laufrichtung 80 eine Richtungsänderung erfährt. Ein vorderer Stirnrand 36 und ein hinterer Stirnrand 38 eines Filterbalgs 12 sind durch eine Punktsymmetrie komplementär zueinander ausgebildet, so dass die beiden Stirnränder 36, 38 von zwei in Laufrichtung 80 des Balgs 15 des Filtermediums 14 aufeinander folgenden Filterbälgen 12 unmittelbar aneinander passen. Die vier in Figur 6 dargestellten Filterbälge 12 sind punktsymmetrisch ausgebildet, da sie durch aufeinander folgende Spiegelungen an den in der Bildebene von Figur 6 senkrecht stehenden Ebenen 52 und 54 gespiegelt jeweils in sich selbst übergeführt werden können.

So können die vier Filterbälge 12 aus dem Balg 15 des Filtermediums 14 ohne Verschnitt und Abfall ausgeschnitten werden. Die Konturen 86 und 87 in den Stirnrändern 36 und 38 eines Filterbalgs 12 stellen lediglich schematische Ausführungsbeispiele dar und können mit entsprechenden Rundungen versehen sein.

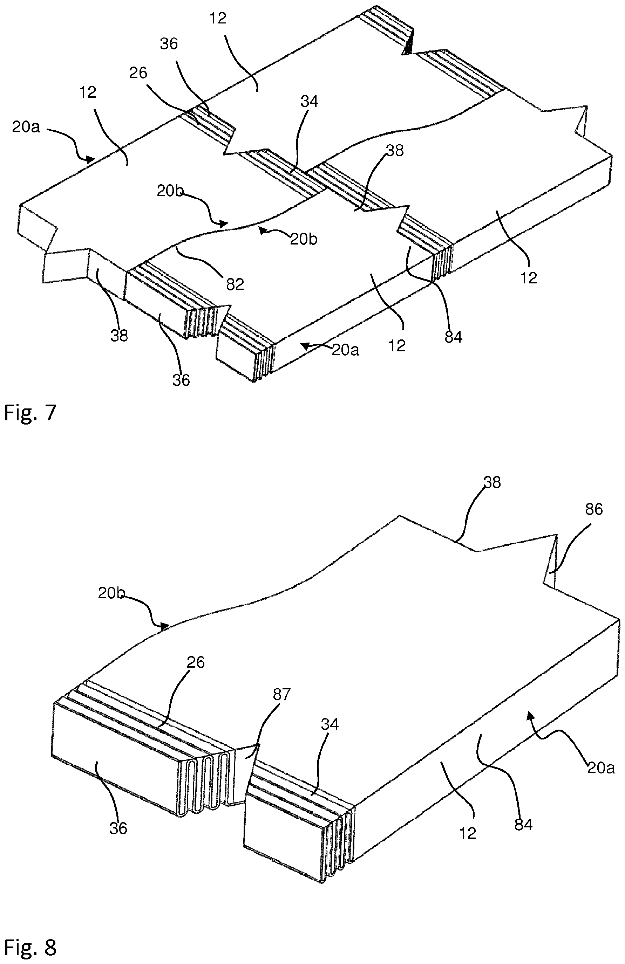

In Figur 7 sind die vier aneinander grenzenden Filterbälge 12 aus Figur 5 isometrisch dargestellt. Jeweils zwei Filterbälge 12 liegen aufgrund der punktsymmetrisch verlaufenden Stirnkantenfläche 20b direkt aneinander an, so dass sie mit einer geeignet geführten Schnittbahn 82 ohne jeglichen Verschnitt an der Stirnkantenfläche 20b aus dem Balg 15 des Filtermediums 14, wie in Figur 1 dargestellt, ausgeschnitten werden können. In Laufrichtung 80 des Balgs 15 des Filtermediums 14 sind die Stirnränder 36, 38 durch eine Punktsymmetrie komplementär zueinander ausgeführt, so dass jeweils zwei Filterbälge 12 hier direkt hintereinander liegen können.

Die aufgestellten Falten 34 sind lediglich in einem Teil der Filterbälge 12 ausgeführt. Für den Rest des Filterbalgs sind lediglich die äußeren Konturen dargestellt.

Figur 8 ist ein Filterbalg 12 aus Figur 7 isometrisch dargestellt. Die Stirnkanten 22a der aufgestellten Falten 34 sind so deutlich zu erkennen. Der Filterbalg 12 ist ebenfalls rein schematisch dargestellt. In der Darstellung ist beispielsweise der Rohfluidbereich 60 von oben auf den Filterbalg 12 zu sehen, während der Reinfluidbereich 62 unterhalb des Filterbalgs 12 angeordnet ist. Die Falten 34 schließen an beiden Enden des Filterbalgs 12 mit den Stirnrändern 36 und 38 ab. Die Falten 34 weisen eine gleiche Faltenhöhe 48 auf. Eine Dichtmittelspur 42 zum Verkleben und Abdichten der Stirnkanten 22a, 22b ist unmittelbar benachbart an den Stirnkanten 22a, 22b aufgetragen.

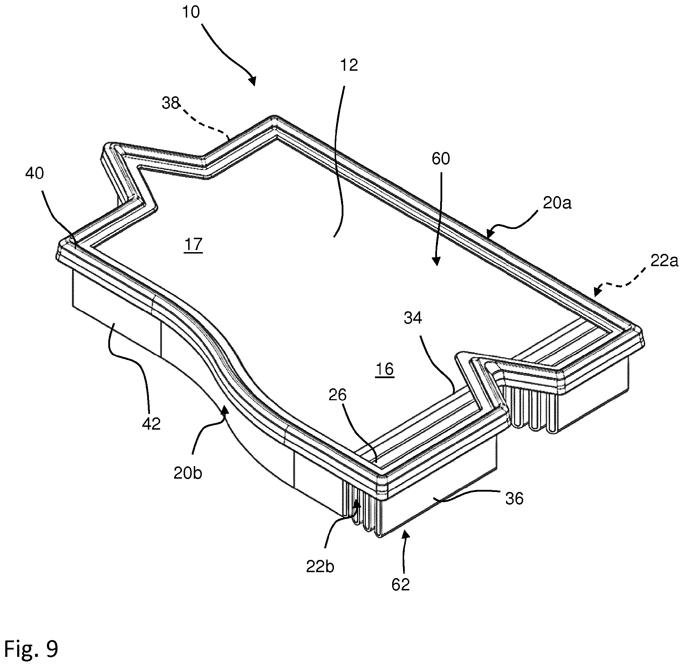

Figur 9 zeigt eine isometrische Darstellung eines Filterelements 10 nach einem Ausführungsbeispiel der Erfindung mit dem Filterbalg aus Figur 8 und angeschäumter Dichtung. Die Dichtung 40 ist in dem gezeigten Ausführungsbeispiel auf der der Rohfluidseite 60 des Filterbalgs 12 zugewandten Kante angeordnet, so dass der mögliche Eintrag von Staubpartikeln beim Wechsel eines Filterelements 10 in einem Filtergehäuse minimiert wird. Günstigerweise kann dafür eine an den Filterbalg 12 deckungsgleich angeschäumte Dichtung, beispielsweise aus Polyurethanschaum, eingesetzt werden. Der Filterbalg 12 kann jedoch an Stirnkanten 22a, 22b und Seitenkanten 23a, 23b einer Rohfluidseite 60 und/oder einer Reinfluidseite 62 eine umlaufende Dichtung 40 aufweisen.

## Patentansprüche

1. Verfahren zum Herstellen von wenigstens zwei Filterbälgen (12) mit jeweils zwei Stirnkantenflächen (20a, 20b) und jeweils zwei Seitenflächen (36, 38) aus einem Balg (15) mit einem in einer Laufrichtung (80) laufenden Filtermedium (14) mit Faltkanten (26), wobei die Filterbälge (12) an einander angrenzend und parallel hergestellt werden, indem im Balg (15) eine Schnittbahn (82) zwischen Stirnkantenflächen (20a, 20b) der Filterbälge (12) wenigstens bereichsweise quer zu den Faltkanten (26) des Balgs (15) so ausgeführt wird, dass die Filterbälge (12) in Laufrichtung (80) nebeneinander liegend und punktsymmetrisch zueinander ausgebildet werden, wobei die Schnittbahn (82) entlang der Laufrichtung (80) zwei Richtungsänderungen quer zur Laufrichtung (80) erfährt, wobei die Richtungsänderung jeweils mit einem Winkel (90) von weniger als 45° mit einem Radius ausgeführt wird und wobei Stirnkanten (22a, 22b) jeweils, insbesondere mittels zumindest einer Dichtmittelspur (42) oder einem Seitenband, seitlich abgedichtet werden.

2. Verfahren nach Anspruch 1, wobei wenigstens vier Filterbälge (12) parallel hergestellt werden, indem wenigstens eine Schnittbahn (84) quer und wenigstens eine Schnittbahn (82) entlang der Laufrichtung (80) ausgeführt wird.

3. Verfahren nach einem der vorhergehenden Ansprüche, wobei das Filtermedium (14) Cellulose aufweist.

4. Filterelement (10) zum Filtern eines Fluids, mit einem Filterbalg (12) mit jeweils zwei Stirnkantenflächen (20a, 20b) und jeweils zwei Seitenflächen (36, 38), hergestellt nach einem der vorhergehenden Ansprüche, wobei die Falten (34) des Filterbalgs (12) zu zickzackförmigen Falten (34) gefaltet sind und wobei die Falten (34) seitens der Stirnkanten (22a, 22b) jeweils, insbesondere mittels zumindest einer Dichtmittelspur (42) oder einem Seitenband, seitlich abgedichtet sind, wobei wenigstens eine der Stirnkantenflächen (20a, 20b) zwei jeweils mit einem Winkel (90) von weniger als 45° und mit einem Radius ausgeführte Richtungsänderungen aufweist.

5. Filterelement nach Anspruch 4, wobei der Filterbalg (12) an Stirnkanten (22a, 22b) und Stirnrändern (36, 38) einer Rohfluidseite (60) und/oder einer Reinfluidseite (62) (62) eine umlaufende Dichtung (40) aufweist.

6. Filterelement nach Anspruch 5, wobei die Dichtung (40) an den Filterbalg (12) angeschäumt ist.

7. Filtersystem mit einem Filterelement (10) nach einem der Ansprüche 4bis 6, wobei das Filterelement (10) austauschbar in einem Filtergehäuse angeordnet ist, das wenigstens ein Gehäuseunterteil und ein Gehäuseoberteil umfasst, welche lösbar fluiddicht verbunden sind, und wobei das Filterelement eine Rohfluidseite von einer Reinfluidseite des Filtersystems fluiddicht trennt.

8. Verwendung des Filtersystems nach Anspruch 7als Luftfilter, insbesondere einer Brennkraftmaschine, insbesondere eines Kraftfahrzeugs.

## Claims

1. Method for manufacturing at least two filter bellows (12), with two front edge surfaces each (20a, 20b) and two side faces each (36, 38) from a bellows (15) with a filter medium (14) extending in a running direction (80) with fold edges (26), wherein the filter bellows (12) are manufactured adjacent to one another and in parallel by realizing in the bellows (15) a cutting path (82) between front edge surfaces (20a, 20b) of the filter bellows (12) at least in some areas transversely to the fold edges (26) of the bellows (15) in such a way that the filter bellows (12) are configured in running direction (80) adjacent to each other and point-symmetrically to one another, wherein the cutting path (82) experiences along the running direction (80) two directional changes transversely to the running direction (80), wherein the directional change is realized in each case at an angle (90) of less than 45° with a radius and wherein front edges (22a, 22b) are each laterally sealed, in particular using at least one sealant track (42) or a sideband.

2. Method according to claim 1, wherein at least four filter bellows (12) are manufactured in parallel by realizing at least one cutting path (84) transversely to and at least one cutting path (82) along the running direction (80).

3. Method according to one of the preceding claims, wherein the filter medium (14) features cellulose.

4. Filter element (10) for filtering a fluid, having a filter bellows (12) with two front edge surfaces each (20a, 20b) and two side faces each (36, 38), manufactured according to one of the preceding claims, wherein the folds (34) of the filter bellows (12) are folded to form zigzag-shaped folds (34) and wherein the folds (34) are each laterally sealed on the side of the front edges (22a, 22b), in particular using at least one sealant track (42) or one sideband, wherein at least one of the front edge surfaces (20a, 20b) experiences two directional changes each realized with an angle (90) of less than 45° and with a radius.

5. Filter element according to claim 4, wherein the filter bellows (12) features on front edges (22a, 22b) and on front faces (36, 38) of a raw fluid side (60) and/or of a clean fluid side (62) a circumferential seal (40).

6. Filter element according to claim 5, wherein the seal (40) is foamed onto the filter bellows (12).

7. Filter system having a filter element (10) according to one of the claims 4 to 6, wherein the filter element (10) is replaceably disposed in a filter housing which comprises at least one housing lower part and one housing upper part which are detachably connected in a fluid-tight manner, and wherein the filter element separates a raw fluid side from a clean fluid side of the filter system in a fluid-tight manner.

8. Use of the filter system according to claim 7 as an air filter, in particular of an internal combustion engine, in particular of a motor vehicle.

## Revendications

1. Procédé de fabrication d'au moins deux soufflets de filtre (12) avec respectivement deux surfaces d'arêtes frontales (20a, 20b) et respectivement deux surfaces latérales (36, 38) à partir d'un soufflet (15) avec un milieu filtrant (14) évoluant dans un sens de passage (80) et doté d'arêtes de pliage (26), les soufflets de filtre (12) étant fabriqués de manière à être adjacents et parallèles par réalisation dans le soufflet (15) d'une arête de coupe (82) entre les surfaces d'arêtes frontales (20a, 20b) des soufflets de filtre (12), au moins dans certaines zones en travers des arêtes de pliage (26) du soufflet (15), de sorte que les soufflets de filtre (12) soient disposés, dans le sens de passage (80), côte à côte et en symétrie ponctuelle, l'arête de coupe (82) étant soumise, le long du sens de passage (80), à deux changements de direction en travers du sens de passage (80), le changement de direction s'effectuant en courbe respectivement selon un angle (90) de moins de 45°, et des arêtes frontales (22a, 22b) étant respectivement étanchées en sens latéral, notamment au moins d'un cordon d'étanchéité (42) ou d'une bande latérale.

2. Procédé selon la revendication 1, au moins quatre soufflets de filtre (12) étant fabriqués de manière parallèle par le fait qu'au moins une arête de coupe (84) est exécutée en travers et au moins une arête de coupe (82) est exécutée le long du sens de passage (80).

3. Procédé selon l'une des revendications précédentes, le milieu filtrant (14) comportant de la cellulose.

4. Élément filtrant (10) destiné à filtrer un fluide, avec un soufflet de filtre (12) avec respectivement deux surfaces d'arêtes frontales (20a, 20b) et respectivement deux surfaces latérales (36, 38), fabriqué selon l'une des revendications précédentes, les plis (34) du soufflet de filtre (12) étant pliés pour former des plis en accordéon (34) et les plis (34) des côtés des arêtes frontales (22a, 22b) étant respectivement étanchées latéralement, notamment au moyen d'au moins un cordon d'étanchéité (42) ou d'une bande latérale, au moins l'une des surfaces d'arêtes frontales (20a, 20b) étant soumise à deux changements de direction s'effectuant en courbe respectivement selon un angle (90) de moins de 45°.

5. Élément filtrant selon la revendication 4, le soufflet de filtre (12) comportant un joint périphérique (40) sur les arêtes frontales (22a, 22b) et sur les bords latéraux (36, 38) d'un côté de fluide brut (60) et/ou d'un côté de fluide pur (62).

6. Élément filtrant selon la revendication 5, le joint d'étanchéité (40) étant fixé par moussage sur le soufflet de filtre (12).

7. Système de filtre avec un élément filtrant (10) selon l'une des revendications 4 à 6, l'élément filtrant (10) étant disposé de manière à pouvoir être remplacé dans un boîtier de filtre comprenant au moins une partie inférieure de boîtier et une partie supérieure de boîtier qui sont reliées de manière amovible et étanche au fluide, l'élément filtrant séparant de manière étanche au fluide un côté de fluide brut d'un côté de fluide pur du système de filtre.

8. Utilisation du système de filtre selon la revendication 7 en tant que filtre à air, notamment d'un moteur à combustion interne, notamment d'un véhicule automobile.
